# EUROPÄISCHE PATENTSCHRIFT

(11) **EP 1 129 394 B1**
(45) Veröffentlichungstag und Bekanntmachung des Hinweises auf die Patenterteilung: **19.02.2003**
(21) Anmeldenummer: 99963190.6
(22) Anmeldetag: 03.11.1999
(51) Int. Cl.: G06F 1/14, G05B 19/05

(54) **NETZWERKTEILNEHMER**
NETWORK SUBSCRIBER
ABONNE DE RESEAU

(30) Priorität: 13.11.1998 DE 29820339 U
(43) Veröffentlichungstag der Anmeldung: 05.09.2001
(73) Patentinhaber: SIEMENS AKTIENGESELLSCHAFT, 80333 München (DE)
(72) Erfinder: EGLE, Fridolin, D-76448 Durmersheim (DE)
(86) Internationale Anmeldenummer: DE9903509
(87) Internationale Veröffentlichungsnummer: WO00029929

(56) Entgegenhaltungen:
- DE-A- 3 638 947
- DE-A- 4 320 137
- US-A- 5 276 659
- US-A- 5 580 366
- PATENT ABSTRACTS OF JAPAN vol. 007, no. 180 (P-215), 9. August 1983 (1983-08-09) & JP 58 084307 A (TOSHIBA KIKAI KK), 20. Mai 1983 (1983-05-20)

## Beschreibung

5 Die Erfindung betrifft einen Netzwerkteilnehmer, der mit einem weiteren Netzwerkteilnehmer über eine Nachrichtenleitung verbindbar ist und dem in einer Empfangsbetriebsart von dem weiteren Netzwerkteilnehmer eine mit einer Uhrzeit versehene Uhrzeitnachricht zuführbar ist.

Ein derartiger Netzwerkteilnehmer ist aus dem Siemens-Katalog ST 70, Kapitel 12, Ausgabe 1997, bekannt. Dieser Netzwerkteilnehmer ist für einen Einsatz in einem verteilten Automatisierungssystem geeignet, das mehrere Automatisierungskomponenten umfaßt, die zur Steuerung eines technischen Prozesses nach Maßgabe einer Automatisierungsaufgabe synchronisiert werden müssen. Dazu ist vorgesehen, daß ein am Netzwerk angeschlossener Uhrzeitsender zyklisch und per "Broadcasting" oder "Multicasting" eine Uhrzeitnachricht aussendet. Anhand dieser ausgesendeten Uhrzeitnachricht synchronisieren die Automatisierungskomponenten ihre Uhren. Durch unterschiedliche Verweilzeiten einer Uhrzeitnachricht im Sender des Netzwerkteilnehmers und/oder in Netzkomponenten kann es vorkommen, daß die in den Uhrzeitnachrichten hinterlegten Uhrzeiten zum Empfangszeitpunkt fehlerhaft sind.

In der deutschen Gebrauchsmusteranmeldung 298 19 806.1 wird vorgeschlagen, einen Netzwerkteilnehmer mit Mitteln zu versehen, die es einerseits ermöglichen, Verzögerungszeiten vom Zeitpunkt des Eintrags in eine Uhrzeitnachricht bis zum Sendezeitpunkt und andererseits Verzögerungszeiten vom Empfangszeitpunkt der Uhrzeitnachricht bis zum Zeitpunkt der Weiterverarbeitung der Uhrzeit zu korrigieren.

Der vorliegenden Erfindung liegt die Aufgabe zugrunde, einen Netzwerkteilnehmer der eingangs genannten Art mit einer verbesserten Synchronisationsgenauigkeit seiner Uhrzeit zu schaffen.

Diese Aufgabe wird dadurch gelöst, daß
- der Netzwerkteilnehmer mit dem weiteren Netzwerkteilnehmer über eine Synchronisationsleitung verbindbar ist, über welche dem Netzwerkteilnehmer durch den weiteren Netzwerkteilnehmer Zeitimpulse zuführbar sind, wobei der weitere Netzwerkteilnehmer gleichzeitig einen Zeitimpuls und eine Uhrzeitnachricht dem Netzwerkteilnehmer übermittelt,
- der Netzwerkteilnehmer mit Mitteln versehen ist, welche die Zeitdifferenz zwischen dem Empfangszeitpunkt des Zeitimpulses und dem Empfangszeitpunkt der Uhrzeitnachricht erfassen und entsprechend dieser Zeitdifferenz die in der Uhrzeitnachricht hinterlegte Uhrzeit anpassen.

Dadurch ist sichergestellt, daß die im Empfänger weiterzuverarbeitende Uhrzeit zum Zeitpunkt der Weiterverarbeitung auch die korrekte Uhrzeit ist und ferner die Uhr des Netzwerkteilnehmers und die Uhr des weiteren Netzwerkteilnehmers weitgehend synchronisiert sind.

Zur einfachen Erfassung der Zeitdifferenz ist ein Timer vorgesehen, welcher durch den Zeitimpuls gestartet und durch das Uhrzeittelegramm angehalten wird.

Anhand der Zeichnung, in der ein Ausführungsbeispiel der Erfindung veranschaulicht ist, werden im folgenden die Erfindung, deren Ausgestaltungen sowie Vorteile näher erläutert.

Es zeigen
- Figur 1: eine Prinzipdarstellung eines Netzwerkes und
- Figur 2: ein Zeitdiagramm von Übertragungssignalen.

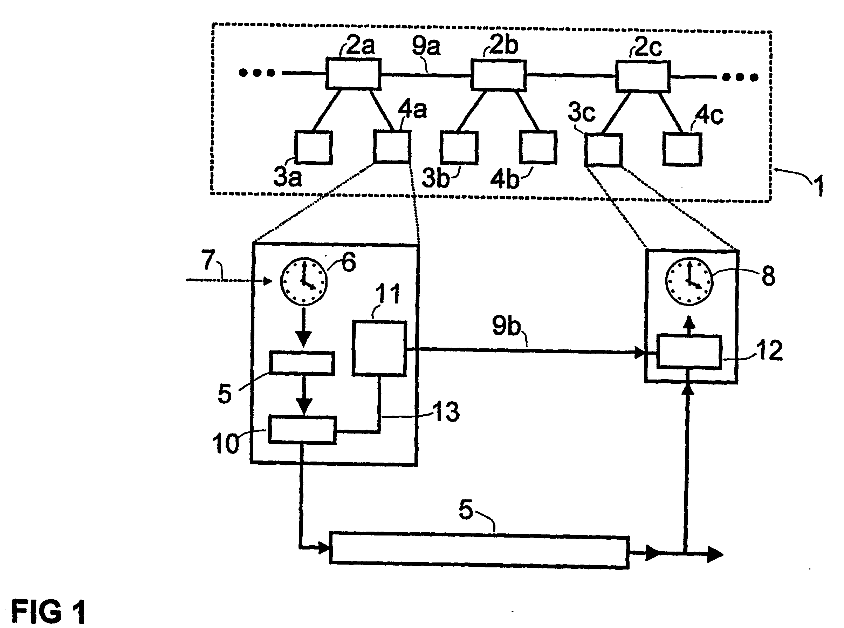

In Figur 1 ist mit 1 ein Netzwerk, z. B. ein sogenanntes Local Area Network (LAN), bezeichnet. An dieses Netzwerk 1 sind mehrere Netzwerkteilnehmer 2a, 2b, 2c, ... über eine Nachrichtenleitung 9a anschließbar, welche jeweils einen Empfänger 3a, 3b, 3c, ... und einen Sender 4a, 4b, 4c, ... aufweisen. Im vorliegenden Beispiel ist angenommen, daß dem Empfänger 3c des Netzwerkteilnehmers 2c eine Nachricht 5 durch den Sender 4a des Netzwerkteilnehmers 2a zu übertragen ist. In dieser Uhrzeitnachricht 5 ist die Uhrzeit einer Uhr 6 des Netzwerkteilnehmers 2a hinterlegt, der durch ein Signal 7 extern synchronisierbar ist, wobei mit der zu einem Eintragungszeitpunkt in die Uhrzeitnachricht 5 eingetragenen Uhrzeit eine Uhr 8 des Netzwerkteilnehmers 2c zu synchronisieren ist. Im vorliegenden Beispiel wird davon ausgegangen, daß die Zeitdifferenz zwischen dem Zeitpunkt der Eintragung der Uhrzeit in die Uhrzeitnachricht 5 und dem Sendezeitpunkt dieser Uhrzeitnachricht 5 vernachlässigbar ist oder daß durch geeignete, z. B. in der deutschen Gebrauchsmusteranmeldung 298 19 806.1 beschriebene Maßnahmen diese Zeitdifferenz korrigiert ist. Um eine Fehlsynchronisierung der Uhr 8 des Teilnehmers 2c mit der Uhrzeit des Teilnehmers 2a zu vermeiden, ist es erforderlich, durch Leitungsverzögerungen bewirkte Abweichungen weitgehend auszugleichen. Dazu ist eine Synchronisierleitung 9b vorgesehen, über die dem Empfänger 3c des Netzwerkteilnehmers 2c Zeitimpulse zuführbar sind. Zum Sendezeitpunkt der Uhrzeitnachricht 5 überträgt gleichzeitig ein Netzwerkcontroller 10 oder, wie im vorliegenden Beispiel dargestellt, eine Zeitimpuls-Übertragungseinheit 11 einer Erfassungs- und Anpassungseinheit 12 des Empfängers 3c einen Zeitimpuls, z. B. einen Zeitimpuls in Form eines Sekundenimpulses. Den Sendezeitpunkt der Uhrzeitnachricht zeigt der Netzwerkcontroller 10 der Zeitimpuls-Übertragungseinheit 11 über eine Leitung 13 an. Der Zeitimpuls startet einen Timer dieser Erfassungs- und Anpassungseinheit 12, welcher beim Empfang der Uhrzeitnachricht 5d durch die Einheit 12 angehalten wird, wodurch die Zeitdifferenz zwischen Empfangszeitpunkt des Zeitimpulses und Empfangszeitpunkt der Uhrzeitnachricht 5d ermittelt ist. Die Erfassungs- und Anpassungseinheit 12 paßt schließlich die in der Uhrzeitnachricht 5d hinterlegte Uhrzeit an, indem die Einheit 12 zu der hinterlegten Uhrzeit die ermittelte Zeitdifferenz addiert, was bewirkt, daß die Uhrzeiten des Senders 4a und des Empfängers 3c weitgehend synchronisiert sind.

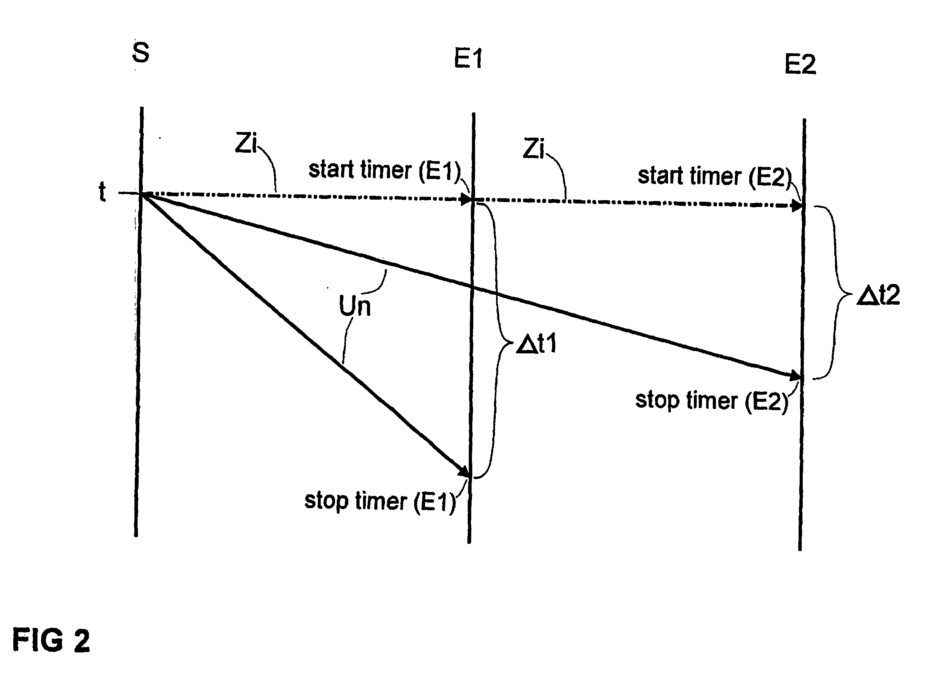

Zur Verdeutlichung der Uhrzeitanpassung wird im folgenden auf Figur 2 verwiesen, in welcher ein Zeitdiagramm von Übertragungssignalen dargestellt ist.
Zu einem Zeitpunkt t sendet ein Sender S eines Netzwerkteilnehmers Empfängern E1, E2 von weiteren Netzwerkteilnehmern einen Zeitimpuls Zi und gleichzeitig eine Uhrzeitnachricht Un. Der Zeitimpuls Zi startet in den Empfängern E1, E2 entsprechende Timer, welche zum Zeitpunkt des Empfangs der Uhrzeitnachricht Un gestoppt werden. Im dargestellten Beispiel ist die Uhrzeitnachricht Un bei der Übertragung zum Empfänger E1 weniger zeitverzögert (Δt1) als bei der Übertragung zum Empfänger E2 (Δt2). Die in der Uhrzeitnachricht hinterlegte Uhrzeit wird jeweils durch eine Erfassungs- und Anpassungseinheit im Empfänger E1 um die Zeitdifferenz Δt1 und im Empfänger E2 um die Zeitdifferenz Δt2 angepaßt.

## Patentansprüche

1. Netzwerkteilnehmer, der mit einem weiteren Netzwerkteilnehmer über eine Nachrichtenleitung (9a) verbindbar ist und dem in einer Empfangsbetriebsart von dem weiteren Netzwerkteilnehmer (2a) eine mit einer Uhrzeit versehene Uhrzeitnachricht (5) zuführbar ist,
**dadurch gekennzeichnet, daß**
- der Netzwerkteilnehmer (2b) mit dem weiteren Netzwerkteilnehmer (2a) über eine Synchronisationsleitung (9b) verbindbar ist, über welche dem Netzwerkteilnehmer (2b) durch den weiteren Netzwerkteilnehmer (2a) Zeitimpulse (Zi) zuführbar sind, wobei der weitere Netzwerkteilnehmer (2a) gleichzeitig einen Zeitimpuls (Zi) und eine Uhrzeitnachricht (5) dem Netzwerkteilnehmer (2b) übermittelt,
- der Netzwerkteilnehmer (2b) mit Mitteln (12) versehen ist, welche die Zeitdifferenz (Δt1, Δt2) zwischen dem Empfangszeitpunkt des Zeitimpulses (Zi) und dem Empfangszeitpunkt der Uhrzeitnachricht (5) erfassen und entsprechend dieser Zeitdifferenz (Δt1, Δt2) die in der Uhrzeitnachricht (5) hinterlegte Uhrzeit anpassen.

2. Netzwerkteilnehmer nach Anspruch 1, **dadurch gekennzeichnet, daß** der Netzwerkteilnehmer (2b) einen Timer aufweist, welcher zur Erfassung der Zeitdifferenz (Δt1, Δt2) durch den Zeitimpuls (Zi) gestartet und durch die Uhrzeitnachricht (5) angehalten wird.

3. Anordnung mit einem Netzwerkteilnehmer nach Anspruch 1 oder 2 und einem über eine Nachrichtenleitung (9a) und über eine Synchronisationsleitung (9b) verbindbaren weiteren Netzwerkteilnehmer (2a), wobei dem Netzwerkteilnehmer (2b) durch den weiteren Teilnehmer (2a) gleichzeitig über die Nachrichtenleitung (9a) eine mit einer Uhrzeit versehene Uhrzeitnachricht (5) und über die Synchronisationsleitung (9b) ein Zeitimpuls (Zi) übertragbar ist.

## Claims

1. Network subscriber station, which can be connected to another network subscriber station via a message line (9a), and to which a time of day message (5) with a time of day can be fed from the other network subscriber station (2a) in a reception operating mode,
**characterised in that**
- the network subscriber station (2b) can be connected to the other network subscriber station (2a) via a synchronisation line (9b), via which timing pulses (Zi) can be fed to the network subscriber station (2b) by the other network subscriber station (2a), wherein the other network subscriber station (2a) simultaneously transmits a timing pulse (Zi) and a time of day message (5) to the network subscriber station (2b),
- the network subscriber station (2b) is provided with means (12) which capture the time difference (Δt1, Δt2) between the time of reception of the timing pulse (Zi) and the time of reception of the time of day message (5), and adjust the time of day which is held in the time of day message (5) on the basis of this time difference (Δt1, Δt2).

2. Network subscriber station according to Claim 1, **characterised in that** the network subscriber station (2b) has a timer, which is started by the timing pulse (Zi) and stopped by the time of day message (5), to capture the time difference (Δt1, Δt2).

3. Arrangement with a network subscriber station according to Claim 1 or 2, and another network subscriber station (2a) which can be connected via a message line (9a) and synchronisation line (9b), wherein a time of day message (5) with a time of day can be transmitted to the network subscriber station (2b) via the message line (9a), and simultaneously a timing pulse (Zi) can be transmitted to the network subscriber station (2b) via the synchronisation line, by the other subscriber station (2a).

## Revendications

1. Abonné de réseau qui peut être relié à un autre abonné de réseau par l'intermédiaire d'une ligne de télécommunication (9a) et auquel, dans un mode de fonctionnement en réception, une information horaire (5) munie d'une heure peut être envoyée par l'autre abonné de réseau (2a),
**caractérisé par le fait que**
- l'abonné de réseau (2b) peut être relié à l'autre abonné de réseau (2a) par l'intermédiaire d'une ligne de synchronisation (9b) par l'intermédiaire de laquelle des impulsions temporelles (Zi) peuvent être envoyées à l'abonné de réseau (2b) par l'autre abonné de réseau (2a), l'autre abonné de réseau (2a) transmettant simultanément une impulsion temporelle (Zi) et une information horaire (5) à l'abonné de réseau (2b),
- l'abonné de réseau (2b) est muni de moyens (12) qui détectent la différence de temps (Δt1, Δt2) entre l'instant de réception de l'impulsion temporelle (Zi) et l'instant de réception de l'information horaire (5) et qui adaptent l'heure mémorisée dans l'information horaire (5) en fonction de cette différence de temps (Δt1, Δt2).

2. Abonné de réseau selon la revendication 1, **caractérisé par le fait que** l'abonné de réseau (2b) comporte un temporisateur qui, pour la détection de la différence de temps (Δt1, Δt2), est déclenché par l'impulsion temporelle (Zi) et est arrêté par l'information horaire (5).

3. Dispositif comportant un abonné de réseau selon la revendication 1 ou 2 et un autre abonné de réseau (2a) pouvant être relié par l'intermédiaire d'une ligné de télécommunication (9a) et d'une ligne de synchronisation (9b), dans lequel l'autre abonné de réseau (2a) peut transmettre simultanément à l'abonné de réseau (2b) une information horaire (5) munie d'une heure par l'intermédiaire de la ligne de télécommunication (9a) et une impulsion temporelle (Zi) par l'intermédiaire de la ligne de synchronisation (9b).
